# EUROPEAN PATENT SPECIFICATION

(11) **EP 0 443 149 B1**
(45) Date of publication and mention of the grant of the patent: **28.09.1994**
(21) Application number: 90124355.0
(22) Date of filing: 16.12.1990
(51) Int. Cl.: F16D 43/06

(54) **Centrifugal disc clutch**
Fliehkraft-Scheibenkupplung
Embrayage centrifuge à disque

(30) Priority: 23.02.1990 IT 1946690
(43) Date of publication of application: 28.08.1991
(73) Proprietor: Gambini, Angelo, I-20010 Pogliano Milanese, Milan (IT)
(72) Inventor: Gambini, Angelo, I-20010 Pogliano Milanese, Milan (IT)
(74) Representative: Giambrocono, Alfonso, Dr. Ing.

(56) References cited:
- DE-A- 1 755 753
- DE-B- 1 207 723
- DE-C- 572 169
- US-A- 2 543 873

## Description

This invention relates to a centrifugal disc clutch specifically allowing gradual coupling between a drive shaft and a driven shaft associated with a power machine, for example of high-inertia type.

There are various known types of centrifugal friction clutches with the basic operating concept of transmitting motion from a drive shaft to a driven shaft via a mass, which can also be in fluid or powder form, which acts by centrifugal effect.

Such constructions are not very satisfactory, particularly because they do not allow the use of suitable materials, and because considerable seal problems arise in incorporating a clutch in an oil bath.

Again if a liquid is used, the movement of the liquid under centrifugal effect induces vacuum which it is difficult to compensate.

The use of hydraulic couplings, which in many circumstances is satisfactory, is not however possible in any application in which the driven shaft can become the drive shaft and the drive shaft becomes locked, because this causes overheating of the coupling.

In DE-B-1 207 723 a centrifugal clutch is described wherein some circular sectors, shaped like wedges and sliding on balls, are forced by centrifugal force into a recess with slanted sides formed between the driving disc and the driven disc and in which it is not possible by simple means, to vary the thrust applied by said sector on the discs.

An object of the present invention is to provide a centrifugal friction clutch which does not suffer from the aforesaid drawbacks.

This and further objects of the invention are attained as will be apparent to the expert of the art on reading the following description and claims.

The centrifugal disc cluth according to the invention is essentially characterised by the features according the characteristic part of the main claim.

The invention is illustrated schematically in cross-section in the single accompanying figure by way of non-limiting example.

With reference to said figure, the centrifugal friction clutch, indicated overall by 1, is mounted between a drive shaft 2 and a driven shaft 3 connected to a power machine (not shown), the shafts 2 and 3 being coaxial.

The clutch 1 consists essentially of a first circular part 4 of c-shape in axial cross-section, provided with a hub 5 connected to the part 4 by for example screws, for the direct connection of the end 2' of the drive shaft 2, lying opposite the end 3' of the driven shaft 3, and a second circular part 6 made rigid with said first part by pins 7 parallel to the axis of the shafts 2 and 3.

The driven shaft 3 is free to rotate relative to said drum member 4, 6, via ball bearings 9, 9' interposed between a hub 14 and the member 4, 6.

The compartment defined by the drum 4, 6 houses a disc 8 through which the pins 7 pass and which is axially slidable relative to them and to the cylindrical walls 4 and 4', so as to divide said compartment into two chambers 20 and 21 on opposite sides of the disc 8. Compression springs 10, positioned about the pins, urge the disc 8 towards the chamber 20. The chamber 20 is at least partially filled with solid bodies 11 of suitable geometrical shape, such as steel balls or bevelled steel cylinders. The chamber 21 contains a friction disc 12 keyed onto the hub 14 which receives the end 3' of the driven shaft 3 but is free to slide axially along said hub by the engagement between projections 12' on the disc and axial slots 15 provided in said hub 14.

In operation, rotating the drive shaft 2 causes the clutch 1 to rotate. By the effect of centrifugal force the solid bodies 11 contained in the chamber 20 exert a thrust action on the disc 8, which slides along the pins 7 compressing the springs 10, until it rests against the friction disc 12 which slides along the grooves 15 to rest against the inner face of the second part 6, which thus forms an annular reaction element. Thus a drive torque is generated by the friction between the contact surfaces of the disc 8, the disc 12 and the part 6, to rotate the driven shaft connected to the power machine.

When the first part 4 stops, the centrifugal effect ceases, as does the axial force on the disc 8, the springs 10 then returning the disc 8 to its initial position, so axially releasing the friction disc 12 so that the driven shaft 3 is no longer driven by the drive shaft 2.

If seal rings 13 are provided, the inner chamber 21 containing the disc 12 can be filled with suitable liquid lubricants.

The mutually contacting surfaces are provided with a layer of material of suitable friction coefficient.

The proposed construction enables a load to be accelerated with a constant torque during starting, with nullification of slippage between the drive part and driven part during during normal working, by operating as a disc clutch in an oil bath.

In the illustrated embodiment the first part of the clutch is connected directly to the drive shaft, but this part could be connected to an alignment coupling mounted directly on the drive shaft, or alternatively said first part 4 could be connected directly to the flywheel of an internal combustion engine by flanging.

One of each of the discs 8 and 12 is provided in the illustrated embodiment, but this number could be increased.

It should be noted that if the driven shaft should act as the drive shaft, there will be no dragging of the original drive shaft 2 as the disc 12 is idle relative to the second part 6 and to the disc 8.

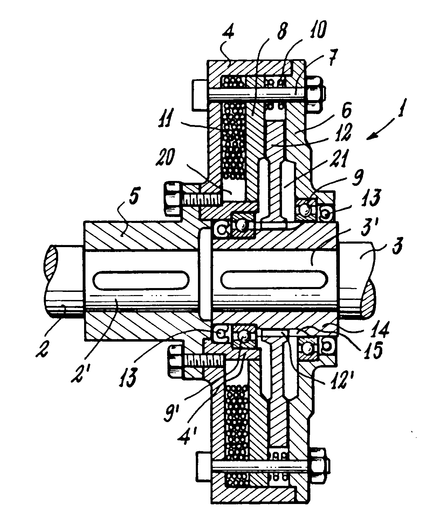

## Claims

1. A centrifugal disc clutch, comprising a drive shaft (2) rigid with a drum member (4, 6), the interior of which is divided into two chambers (20, 21) by at least one disc (8) rotatably rigid with said member but axially slidable within it, in the second chamber (21) being provided at least one friction disc (12) rotatably rigid with an output shaft (3) but axially slidable thereto, said output shaft (3) being free to rotate relative to said member (4, 6), characterised by the fact that said at least one disc (8) is slidable against reaction means (10) and that the first chamber (20) is filled at least partially with a cluster of loose solid bodies (11).

2. A clutch as claimed in the preceding claims, characterised in that the filling material (11) for the first chamber (20) consists of steel balls or steel cylinders with bevelled edges.

3. A clutch according to the preceding claims, charaterised in that the slidable disc (8) is urged away from the friction disc (12) by resilient means (10).

4. A clutch as claimed in claim 1, characterised in that the slidable disc (8) is made rotatably rigid with the drum member (4, 6) by pins (7) rigid with the drum member (4, 6) and passing through apertures provided in said disc (8).

5. A clutch as claimed in claim 1, characterised in that the friction disc (12) is made rotatably rigid with the driven shaft (3) by projections (12') which penetrate into axial slots (15) provided in the hub (14).

## Patentansprüche

1. Fliehkraft-Scheibenkupplung mit einer Antriebswelle (2), die mit einem Trommel-Bauteil (4, 6) starr ist, deren Inneres durch mindestens eine Scheibe (8), die mit dem Bauteil unverdrehbar, aber darin axial verschiebbar ist, in zwei Kammern (20, 21) unterteilt wird, wobei in der zweiten Kammer (21) mindestens eine Reibscheibe (12) vorgesehen ist, die mit einer Abgabewelle (3) unverdrehbar, aber axial dazu verschiebbar ist, wobei sich die Abgabewelle (3) bezüglich des Bauteils (4, 6) frei drehen läßt, dadurch gekennzeichnet, daß mindestens eine Scheibe (8) gegen Reaktionsmittel (10) verschiebbar ist, und daß die erste Kammer (20) zumindest teilweise mit einer Anhäufung beweglicher fester Körper (11) gefüllt ist.

2. Kupplung nach dem vorhergehenden Anspruch, dadurch gekennzeichnet, daß das Füllmaterial (11) für die erste Kammer (20) von Stahlkugeln oder Stahlzylindern mit abgeschrägten Kanten gebildet ist.

3. Kupplung nach den vorhergehenden Ansprüchen, dadurch gekennzeichnet, daß die verschiebbare Scheibe (8) durch elastische Einrichtungen (10) von der Reibscheibe (12) weggedrückt wird.

4. Kupplung nach Anspruch 1, dadurch gekennzeichnet, daß die verschiebbare Scheibe (8) durch Stifte (7), die fest mit dem Trommel-Bauteil (4, 6) sind und durch Öffnungen führen, die in der Scheibe (8) vorgesehen sind, mit dem Trommel-Bauteil (4, 6) unverdrehbar gemacht ist.

5. Kupplung nach Anspruch 1, dadurch gekennzeichnet, daß die Reibscheibe (12) durch Vorsprünge (12'), die in axiale Schlitze (15) eintreten, die in der Nabe (14) vorgesehen sind, mit der angetriebenen Welle (3) unverdrehbar gemacht ist.

## Revendications

1. Embrayage centrifuge à disque comprenant un arbre d'entrée (2) solidaire d'un élément de tambour (4, 6), dont l'intérieur est divisé en deux chambres (20, 21) par au moins un disque (8) solidaire en rotation dudit élément mais libre de coulisser axialement à l'intérieur de celui-ci, au moins un disque de friction (12) étant prévu dans la seconde chambre (21), ledit disque de friction étant solidaire en rotation de l'arbre de sortie (3) mais étant libre de coulisser axialement par rapport à ce dernier, ledit arbre de sortie (3) étant libre de tourner par rapport audit élément (4, 6), caractérisé en ce que ledit ou lesdits disque(s) (8) peuvent coulisser à l'encontre de moyens de réaction (10) et en ce que la première chambre (20) est au moins partiellement remplie d'un amas de corps solides en vrac (11).

2. Embrayage selon la revendication précédente, caractérisé en ce que le matériau de remplissage (11) de la première chambre (20) consiste en des billes d'acier ou des cylindres d'acier présentant des bords chanfreinés.

3. Embrayage selon les revendications précédentes, caractérisé en ce que le disque coulissant (8) est repoussé du disque à friction (12) par des moyens élastiques (10).

4. Embrayage selon la revendication 1, caractérisé en ce que le disque coulissant (8) est rendu solidaire en rotation de l'élément de tambour (4, 6) au moyen de goupilles (7) solidaires de l'élément de tambour (4, 6) et passant à travers des orifices ménagés dans ledit disque (8).

5. Embrayage selon la revendication 1, caractérisé en ce que le disque de friction (12) est rendu solidaire en rotation de l'axe de sortie (3) par des éléments en saillie (12') qui viennent se loger dans des rainures axiales (15) ménagées dans le moyeu (14).
